# EUROPEAN PATENT SPECIFICATION

(11) **EP 3 703 159 B1**
(45) Date of publication and mention of the grant of the patent: **22.04.2026**
(21) Application number: 18871576.7
(22) Date of filing: 25.10.2018
(51) Int. Cl.: C23C 18/16, H01M 50/172, B32B 15/00, C25D 3/02, H01M 50/534, H01M 50/571, H01M 50/19, H01M 50/10, H01M 50/178, H01M 50/188, C23C 18/31, C25D 3/12, C25D 3/04, C25D 5/00, C25D 7/00, H01M 50/105

(54) **LEAD TAB, AND POUCH-TYPE BATTERY COMPRISING SAME**
ANSCHLUSSLASCHE UND DAMIT VERSEHENE POUCH-BATTERIE
LANGUETTE DE CONNEXION ET BATTERIE DE TYPE POCHE LA COMPRENANT

(30) Priority: 26.10.2017 KR 20170140409
(43) Date of publication of application: 02.09.2020
(73) Proprietor: LG CHEM, LTD., Yeongdeungpo-gu Seoul 07336 (KR)
(72) Inventor: KANG, Haegoo, Seoul 06772 (KR); HEO, Namjin, Seoul 06772 (KR)
(74) Representative: Hoffmann Eitle
(86) International application number: PCT/KR2018/012707
(87) International publication number: WO 2019/083298

(56) References cited:
- WO-A1-2010/073827
- WO-A2-01/97583
- JP-A- 2003 147 548
- JP-A- 2009 224 218
- JP-A- 2016 157 516
- JP-A- 2016 184 494
- KR-B1- 101 029 821
- US-A1- 2001 049 027
- US-A1- 2005 136 328
- SIMON J ET AL: "ELECTROLESS DEPOSITION OF BUMPS FOR TAB TECHNOLOGY", METAL FINISHING : DEVOTED EXCLUSIVELY TO METALLIC SURFACE TREATMENTS, ELSEVIER, NEW YORK, NY, US, vol. 88, no. 10, 1 October 1990 (1990-10-01), pages 23 - 26, XP000219691, ISSN: 0026-0576

## Description

### [Technical Field]

The present disclosure relates generally to a lead tab and a pouch type battery including the same, and more particularly to a lead tab and a pouch type battery including the same, which may improve an adhesive strength of a film to a metal and corrosion resistance to an electrolyte inside the pouch type battery.

### [Background Art]

Batteries are devices for storing power and outputting the stored power.

The batteries may be used in vehicles, energy storage devices, and the like, and may be divided into a square battery, a pouch-type battery, and a cylindrical battery according to the shape of batteries.

The pouch-type battery is provided in the form of a pouch, which allows stacking of the batteries.

Such pouch-type battery includes a lead tab for outputting power to the outside, in which as the lead tab is exposed to the outside, there may be problems such as electrolyte leakage, swelling of the lead tab, or the like. Therefore, various studies are conducted to solve these problems.

KR 101 029 821 B1 describes method for manufacturing a positive electrode terminal for a secondary battery using electroless nickel plating. For improving corrosion resistance, a surface treatment with a corrosion resistant agent is applied to a positive terminal of a portion to be connected to a protective circuit.

US 2001/049027 A1 describes a copper foil for tab tape carrier and tab carrier tape and tab tape carrier using the copper foil. The copper foil has on its surface an alloy layer comprising nickel, cobalt and molybdenum. After the copper foil is coated by the nickel-cobalt-molybdenum layer as described above, a chromate treatment layer may optionally be formed on the surface on the side of the M-surface of copper foil or each side, to improve rust resistance and chemical resistance. Further, the copper foil having the nickel-cobalt-molybdenum layer or having both the nickel-cobalt-molybdenum layer and the chromate treatment layer may further has a silane coupling agent treatment layer as an outermost layer on the surface on the side of the M-surface or each side, thereby improving bonding strength

JP 2003147548 A describes a reel made of aluminum or aluminum alloy used for mounting an electronic component such as a semiconductor device on a film carrier tape for mounting an electronic component and winding the film carrier tape. A Ni-P plating layer is first formed by electroless plating on the surface of a base aluminum material, and the Ni plating layer is formed on the plating layer by electroplating. Since the Ni-P plating layer is formed by electroless plating, the film thickness distribution tends to be constant as compared with electroplating. In particular, there is a possibility that the film thickness may fluctuate slightly in a part where the plating solution is not stirred, for example, inside the corner, but basically the film thickness fluctuation is small and the film thickness distribution is uniform.

WO 2010/073827 A1 describes a positive tab lead capable of being connected with each other with a sufficient connection strength at a low energy cost. A nickel coating layer is formed on an entire surface of a copper plate and a partial coating layer made of tin or solder is formed on at least a part of a region of an outer surface of the nickel coating layer to be exposed to an outside of an outer cover. D4 mentions that since the partial coating layer is formed on an entire region (except the side end face) of the aluminum plate of the positive electrode tab lead exposed to the outside, the corrosion resistance can be increased.

### [Disclosure]

### [Technical Problem]

It is an object of the present invention to provide a lead tab and a pouch type battery including the same, which may improve an adhesive strength of a film to a metal and corrosion resistance to an electrolyte in the pouch type battery.

### [Technical Solution]

In accordance with the present invention, the above object can be accomplished by providing a lead tab, including: a metal; and a film disposed on at least one surface of the metal, wherein the metal includes a first metal layer, a second metal layer disposed on the first metal layer, a third metal layer disposed on the second metal layer, and an organic layer disposed on the third metal layer, wherein at least a portion of the third metal layer is plated on the second metal layer by electroless plating.

In accordance with the present invention, the above object can be accomplished by providing a lead tab, including: a metal; and a film disposed on at least one surface of the metal, wherein the metal includes a first metal layer, a second metal layer disposed on the first metal layer, a third metal layer disposed on the second metal layer, and an organic layer disposed on the third metal layer, wherein at least a portion of the third metal layer is plated on the second metal layer by a combination of electroplating and electroless plating.

In accordance with yet another aspect of the present invention, the above object can be accomplished by providing a pouch type battery including: a pouch; an anode and a cathode in the pouch; a separation film for separating the anode and the cathode; an electrolyte in the pouch; a first lead tab electrically connected to the cathode and protrudes outside of the pouch; and a second lead tab electrically connected to the anode and protrudes outside of the pouch, wherein: the first lead tab includes a metal, and a film disposed on at least one surface of the metal; the metal includes a first metal layer, a second metal layer disposed on the first metal layer, a third metal layer disposed on the second metal layer, and an organic layer disposed on the third metal layer; and at least a portion of the third metal layer is plated on the second metal layer by a combination of electroplating and electroless plating.

### [Advantageous Effects]

The scope of the invention is defined by the appended claims. According to the present invention, there is provided a lead tab and a pouch type battery including the same, the lead tab including a metal and a film disposed on at least one surface of the metal, wherein the metal includes a first metal layer, a second metal layer disposed on the first metal layer, a third metal layer disposed on the second metal layer, and an organic layer disposed on the third metal layer, wherein at least a portion of the third metal layer is plated on the second metal layer by electroless plating. Accordingly, an adhesive strength of the film to the metal may be improved, and corrosion resistance to an electrolyte inside the pouch type battery may also be improved.

Particularly, a grain size of the third metal layer plated by electroless plating is smaller than a grain size of the third metal layer plated by electroplating, such that the third metal layer may be plated uniformly on the second metal layer, and wherein grains of the second metal layers have a circular shape, wherein grains of the third metal layers have not a plate shape but the circular shape. Thus, corrosion of the metal, particularly the second metal layer, which is caused by the electrolyte may be prevented, thereby improving corrosion resistance to the electrolyte.

Further, as corrosion of the metal may be prevented, adhesiveness of the film, which is attached to the surface of the metal by thermal fusion, may be improved.

Accordingly, even when the lead tab is exposed to the outside of the pouch, firm adhesion may be maintained, and electrolyte leakage or swelling of the lead tab may be prevented.

The grain size of the third metal layer, plated by electroless plating, is smaller than a grain size of the second metal layer, such that the third metal layer may be plated uniformly on the second metal, thereby preventing corrosion of the metal, particularly the second metal layer, which is caused by the electrolyte, and improving corrosion resistance to the electrolyte.

According to another embodiment of the present disclosure, there are provided a lead tab and a pouch type battery including the same, the lead tab including a metal and a film disposed on at least one surface of the metal, wherein the metal includes a first metal layer, a second metal layer disposed on the first metal layer, a third metal layer disposed on the second metal layer, and an organic layer disposed on the third metal layer, wherein at least a portion of the third metal layer is plated on the second metal layer by a combination of electroplating and electroless plating. Accordingly, an adhesive strength of the film to the metal may be improved, and corrosion resistance to an electrolyte inside the pouch type battery may also be improved.

Particularly, a grain size of the third metal layer plated by a combination of electroplating and electroless plating is smaller than a grain size of the second metal layer, such that the third metal layer may be plated uniformly on the second metal layer, and wherein grains of the second metal layers have a circular shape, wherein grains of the third metal layers have not a plate shape but the circular shape. Thus, corrosion of the metal, particularly the second metal layer, which is caused by the electrolyte may be prevented, thereby improving corrosion resistance to the electrolyte.

Further, corrosion of the metal may be prevented, such that adhesiveness of the film, which is attached to the surface of the metal by thermal fusion, may be improved.

Accordingly, even when the lead tab is exposed to the outside of the pouch, firm adhesion may be maintained, and electrolyte leakage or swelling of the lead tab may be prevented.

### [Description of Drawings]

FIG 1 is a diagram illustrating a pouch type battery according to an embodiment of the present disclosure;
FIG 2 is a perspective diagram of the pouch type battery of FIG 1;
FIGS. 3A and 3B are diagrams illustrating lead tabs of FIG 2;
FIG 4 is a diagram illustrating a structure of a metal of FIG 3A or 3B;
FIGS. 5A and 5B are diagrams explaining an example where third metal layers of FIG 4 are plated by electroplating;
FIGS. 6A to 7 are diagrams explaining an example where the third metal layers of FIG 4 are plated by electroless plating;
FIG 8 is a diagram illustrating a structure of a metal according to another embodiment of the present disclosure;
FIGS. 9A to 10C are diagrams referred to in explaining FIG 8; and
FIG 11 is a diagram illustrating a pouch type battery according to another embodiment of the present disclosure.

### [Best Model

Hereinafter, embodiments of the present disclosure will be described in detail with reference to the accompanying drawings.

In the following description, the terms "module" and "unit", which are used herein to signify components, are merely intended to facilitate explanation of the present disclosure, and the terms do not have any distinguishable difference in meaning or role. Thus, the terms "module" and "unit" may be used interchangeably.

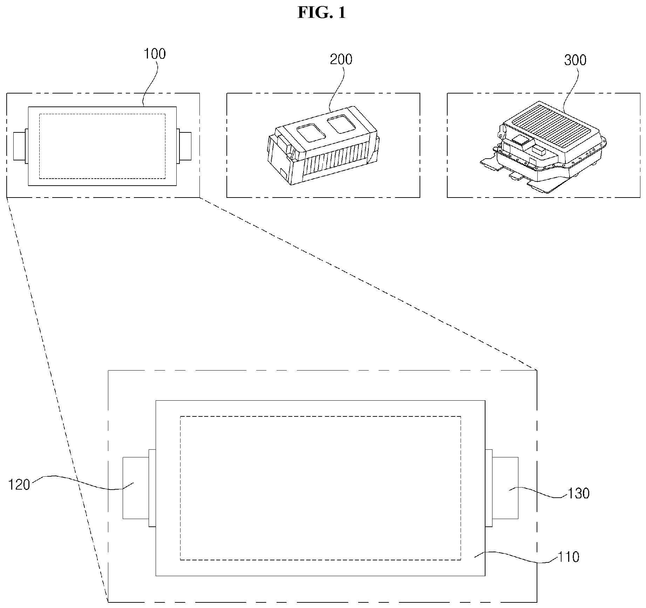

FIG 1 is a diagram illustrating a pouch type battery according to an embodiment of the present disclosure.

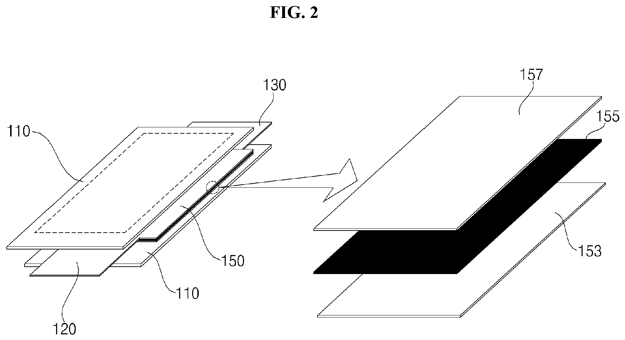

Referring to FIG 1, the pouch type battery 100 includes a pouch 110, a first lead tab 120 which is electrically connected to a cathode (157 in FIG 2) inside the pouch 110 and protrudes outside of the pouch 110, and a second lead tab 130 which is electrically connected to an anode (155 of FIG 2) inside the pouch 110 and protrudes outside of the pouch 110.

A negative voltage is applied or output by the first lead tab 120, and a positive voltage is applied or output by the second lead tab 130.

In the case where a plurality of pouch type batteries 100 are stacked, the plurality of pouch type batteries 100 may form a battery module 200, and in the case where a plurality of battery modules 200 are provided, the plurality of battery modules 200 may form a battery pack 300.

The pouch type battery 100 may be used in various applications, such as vehicles, energy storage devices, drones, and the like.

The present disclosure provides a method for reducing problems, such as electrolyte leakage, swelling of the first lead tab 120 or the second lead tab 130, and the like, which may occur as the first lead tab 120 or the second lead tab 130 protrudes outside of the pouch 110.

To this end, the present disclosure provides the first lead tab 120 or the second lead tab 130 which may improve an adhesive strength of a film to a metal, and may improve corrosion resistance to an electrolyte inside the pouch type battery.

Particularly, provided is the first lead tab 120 which may improve an adhesive strength of a film to a metal, and may improve corrosion resistance to an electrolyte inside the pouch type battery, which will be described below in further detail with reference to FIG 2.

FIG 2 is a perspective diagram of the pouch type battery of FIG 1.

Referring to FIG 2, the pouch type battery 100 includes the pouch 110, an anode 155 and a cathode 157 inside the pouch 110, a separation film 153 for separating the anode 155 and the cathode 157, an electrolyte inside the pouch 110, the first lead tab 120 which is electrically connected to the cathode 157 and protrudes outside of the pouch 110, and the second lead tab 130 which is electrically connected to the anode 155 and protrudes outside of the pouch 110.

While FIG 2 illustrates an example where the separation film 153 is disposed below the cathode 157 and the anode 155 is disposed below the separation film 153, modifications may be made thereto.

For example, the separation film 153 may be disposed below the anode 155, and the cathode 157 may be disposed below the separation film 153.

FIG 2 illustrates an example where a battery cell 150 is provided inside the pouch 110, and the battery cell 150 includes the anode 155, the cathode 157, and the separation film 153 which separates the anode 155 and the cathode 157.

The pouch 110 may be an aluminum pouch.

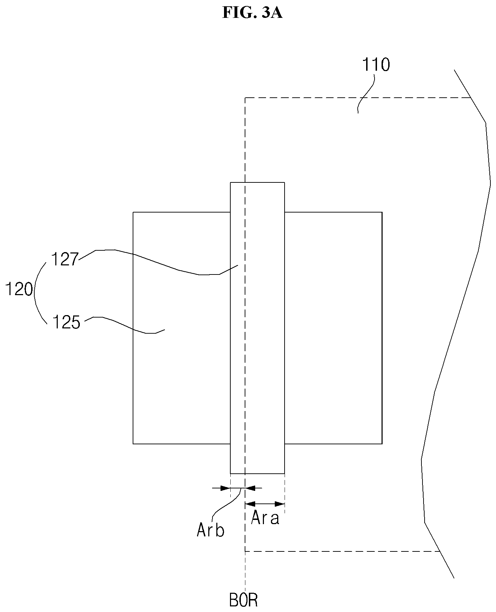

The anode 155 may include aluminum, and the cathode 157 may include copper. The first lead tab 120 connected to the cathode 157 will be described below with reference to FIG 3A and the following figures.

The pouch type battery 100 may be manufactured in such a manner that: after the anode 155, the separation film 157, and the cathode 157 are arranged inside the pouch 110, the first lead tab 120 and the second lead tab 130 are disposed therein; after the electrolyte is injected into the pouch 110, gas is injected thereinto, and then the injected gas is removed therefrom; and encapsulation of the pouch 110 is performed.

In this case, it is important that the first lead tab 120 and the second lead tab 130 protrude outside of the pouch 110 with no electrolyte leaking to the outside. Particularly, it is important that the first lead tab 120 has corrosion resistance to the electrolyte.

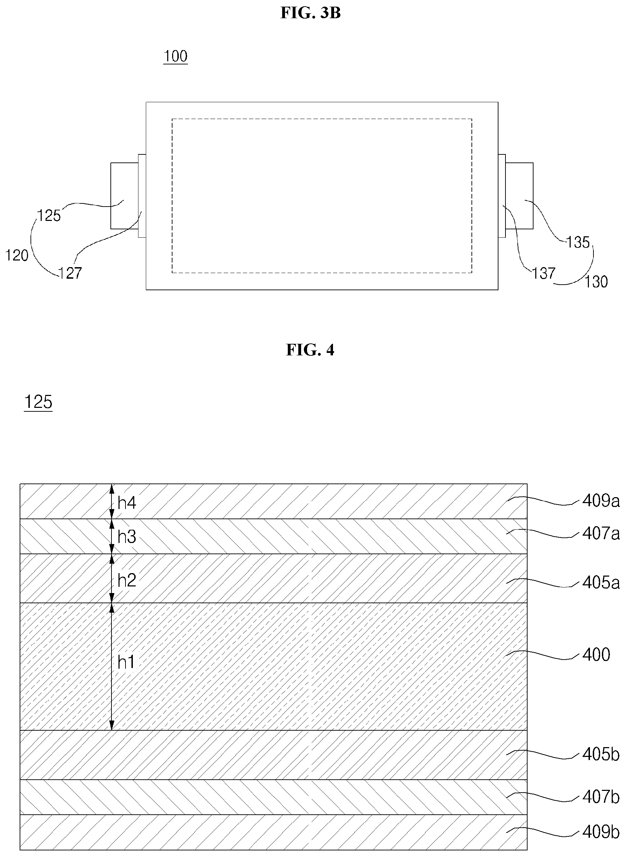

FIGS. 3A and 3B are diagrams illustrating lead tabs of FIG 2.

Referring to FIG 3A, the lead tab 120 includes a metal 125, and a film 127 plated on at least one surface of the metal 125.

The metal 125 may be plated with various copper-based metal layers, and the film 127 may be a polypropylene (PP) film. Particularly, the film 127 may be a sealing film.

It is desired that the film 127 is attached to at least one surface of the metal 125 to prevent the electrolyte in the pouch 110 from leaking to the outside of the pouch 110.

Specifically, it is desired that the film 127 is plated on both sides of the metal 125.

The metal 125 is connected to the cathode 157 inside the pouch 110 and protrudes outside of the pouch 110.

Accordingly, when the film 127 is attached to the surface of the metal 125, it is desired that the film 127 is attached to the metal 125 based on a border BOR between the inside and the outside of the pouch 110. As the film 127 is attached to the metal 125, the electrolyte may be prevented from leaking to the outside of the pouch 110.

In order to further improve the effect of preventing electrolyte leakage, it is desired that a first area Ara of the film 127 inside the pouch 110 is greater than a second area Arb of the film 127 outside the pouch 110, as illustrated in FIG 3A.

For sealing of the pouch 110, a thickness of the film 127 or a thickness of the metal 125 may be the smallest at an area near the border BOR of the pouch 110, and may increase further away from the border BOR of the pouch 110.

It is desired that the edges of the film 127 or the metal 125 are rounded to prevent damage.

Similarly to the first lead tab 120 of FIG 3A which includes the metal 125 and the film 127 plated on at least one surface of the metal 125, it is desired that the second lead tab 130 includes a metal 135 and a film 137 plated on at least one surface of the metal 135 as illustrated in FIG. 3B.

That is, when the film 137 is attached to the surface of the metal 135, it is desired that the film 137 is attached to the metal 135 based on the border BOR between the inside and the outside of the pouch 110. As the film 137 is attached to the metal 135, the electrolyte may be prevented from leaking to the outside of the pouch 110.

Between the first lead tab 120 and the second lead tab 130 which are electrically connected to the cathode 157 and the anode 155 respectively in the pouch 110, the surface of the first lead tab 120 connected to the cathode 157 is at a higher risk of corrosion by the electrolyte.

Accordingly, the present disclosure provides the first lead tab 120 having improved corrosion resistance to the electrolyte, which will be described below with reference to FIG 4 and the following figures.

FIG 4 is a diagram illustrating a structure of a metal of FIG 3A or 3B.

Referring to FIG 4, the metal 125 in the first lead tab 120 includes a first metal layer 400, second metal layers 405a and 405b formed on the first metal layer 400, third metal layers 407a and 407b formed on the second metal layers 405a and 405b, and organic layers 409a and 409b formed on the third metal layers 407a and 407b.

It is desired that the second metal layers 405a and 405, the third metal layers 407a and 407b, and the organic layers 409a and 409b are plated on both sides based on the first metal layer 400.

In this case, the first metal layer 400 includes copper (Cu), the second metal layers 405a and 405b include nickel (Ni), and the third layers 407a and 407b include chromium (Cr).

For example, the second metal layers 405a and 405b are formed on the Copper (Cu)-based first metal layer 400 by performing nickel (Ni)-based electroplating; the third metal layers 407a and 47b are formed on the second metal layers 405a and 405b by performing chromium (Cr)-based electroless plating; and then, the organic layers 409a and 409b are formed thereon.

A height h3 or a thickness of the third metal layers 407a and 407b may be in a range of 3 nm to 20 nm. The third metal layers 407a and 407b formed by the chromium (Cr)-based electroless plating may be thinner compared to electroplating, such that the thickness of the metal 125 may be reduced.

Th organic layers 409a and 409b may include a silicon (Si)-based organic material, an inorganic material such as Zr, Co, Ti, Cr, Ni, and Mo, and the like.

The organic layers 409a and 409b may prevent the electrolyte from permeating the metal 125, particularly between the metal 125 and the film 127, thereby preventing the electrolyte from leaking to the outside of the pouch 110.

Further, the organic layers 409a and 409b may prevent the electrolyte from permeating the chromium (Cr)-based third metal layers 407a and 407b of the metal 125, thereby producing the effect of preventing corrosion.

As illustrated in FIG 4, the first metal layer 400 has the highest height h1, and the second metal layers 405a and 405b has the second highest height h2.

It is desired that the height h3 of the third metal layers 407a and 407b is lower than the height h2 of the second metal layers 405a and 405b, and the height h4 of the organic layers 409a and 409b is lower than the height h2 of the second metal layers 405a and 405b.

As the thickness h3 of the third metal layers 407a and 407b and the thickness h4 of the organic layers 409a and 409b are lower than the height h2 of the second metal layers 405a and 405b, a total thickness of the metal 125 may be reduced, and a possibility of electrolyte leakage may also be reduced by encapsulation of the pouch 110.

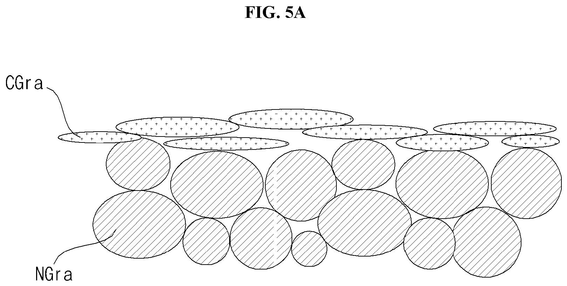

It is desired that at least a portion of the third metal layers 407a and 407b are plated on the second metal layers 405a and 405b by electroless plating, which will be described below with reference to FIGS. 5A to 7.

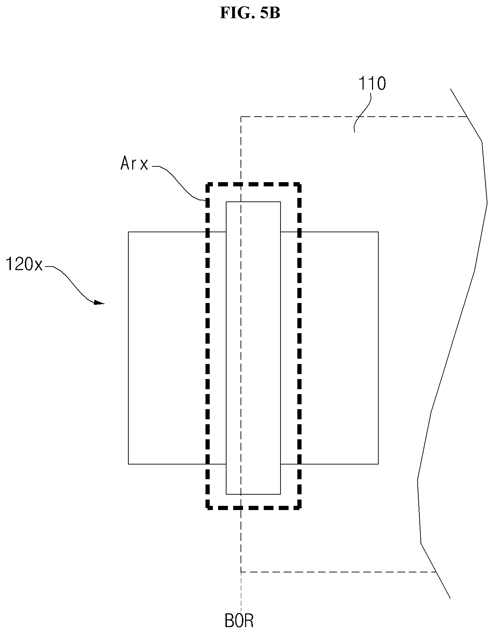

FIGS. 5A and 5B are diagrams explaining an example where the third metal layers of FIG 4 are plated by electroplating.

FIG 5A is a diagram illustrating a grain size of the second metal layers and a grain size of the third metal layers in the case where the third metal layers 407a and 407b of FIG 4 are formed by chromium (Cr)-based electroplating.

Referring to FIG 5A, the grain size NGra of the second metal layers 405a and 405b is smaller than the grain size CGra of the third metal layers 407a and 407b.

The grains of the third metal layers 407a and 407b, formed by electroplating, have a plate shape unlike the grains of the second metal layers 405a and 405b, such that the electrolyte may easily penetrate into the second metal layers 405a and 405b.

Thus, as illustrated in FIG 5B, the film 127 attached to the metal 125 may come off in an area Arx near the border BOR between the inside and the outside of the pouch 110. As a result, the electrolyte may leak at the border BOR between the inside and the outside of the pouch 110, or the metal 125 may be corroded.

In order to prevent the leakage or corrosion, the present disclosure forms the third metal layers 407a and 407b by the chromium (Cr)-based electroless plating as illustrated in FIG 4.

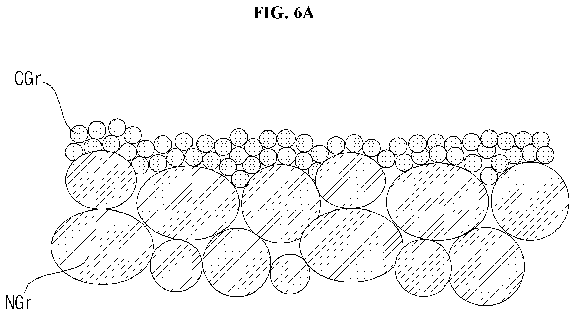

FIGS. 6A to 7 are diagrams explaining an example where the third metal layers of FIG 4 are plated by electroless plating.

FIG 6A is a diagram illustrating a grain size of the second metal layers and a grain size of the third metal layers in the case where the third metal layers 407a and 407b of FIG 4 are formed by chromium (Cr)-based electroless plating.

Referring to FIGS. 6A to 7, the grain size NGr of the second metal layers 405a and 405b is smaller than the grain size CGr of the third metal layers 407a and 407b.

The grains of the third metal layers 407a and 407b, formed by electroless plating, have a circular shape, similarly to the grains of the second metal layers 405a and 405b.

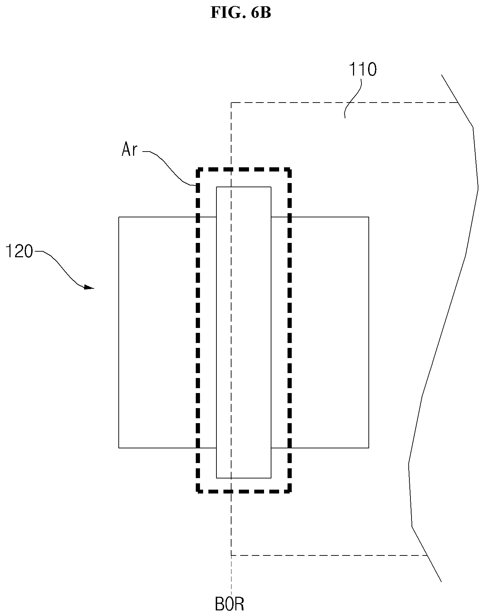

Upon comparison of FIG 5A and FIG 6A, the grains of the third metal layers 407a and 407b of FIG 5A have a plate shape, but the grains of the third metal layers 407a and 407b of FIG 6Ahave a circular shape.

Accordingly, the grain size CGr of the third metal layers 407a and 407b plated by electroless plating is smaller than the grain size CGra of the third metal layers 407a and 407b plated by electroplating, such that density may be improved, and the electrolyte may be prevented from easily penetrating into the second metal layers 405a and 405b.

In this manner, as illustrated in FIG 6B, the film 127 attached to the metal 125 is not separated from the metal 125 in the area (Ar) near the border BOR between the inside and the outside of the pouch 110, thereby preventing electrolyte leakage at the border BOR between the inside and the outside of the pouch 110, and preventing corrosion of the metal 125.

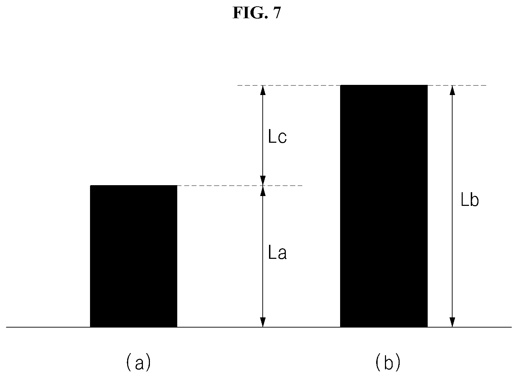

In FIG 7, (a) illustrates an example of digitizing an adhesive strength of a film to a metal including the third metal layers 407a and 407b plated by electroplating; and (b) illustrates an example of digitizing an adhesive strength of a film to a metal including the third metal layers 407a and 407b plated by electroless plating.

Referring to (a) and (b) of FIG 7, Lb of (b) of FIG 7 is higher than La of (a) of FIG 7 by a value of Lc. That is, an adhesive strength of a film to a metal including the third metal layers 407a and 407b plated by electroless plating is improved, such that the film 127 attached to the metal 125 may not come off in the area Ar near the border BOR between the inside and the outside of the pouch 110, thereby preventing electrolyte leakage at the border BOR between the inside and the outside of the pouch 110, and preventing corrosion of the metal 125.

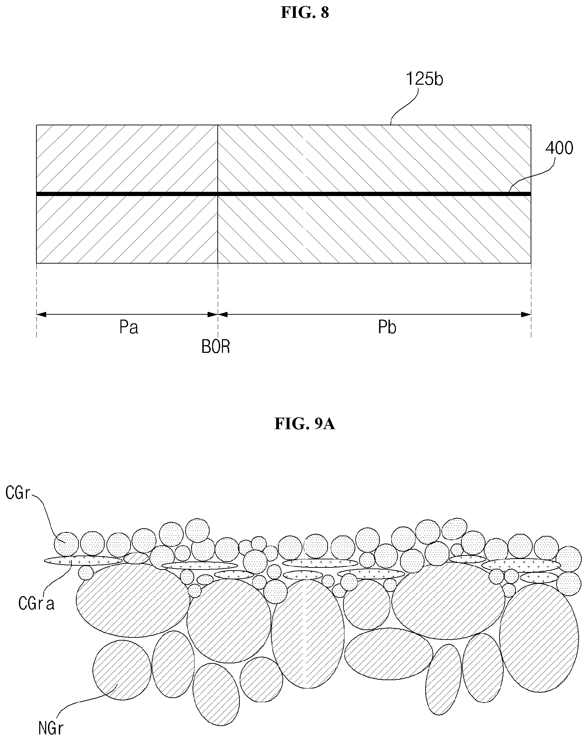

FIG 8 is a diagram illustrating a structure of a metal according to another embodiment of the present disclosure.

Referring to FIG 8, a metal 125b according to another embodiment of the present disclosure includes a first metal layer 400, second metal layers 405a and 405 formed on the first metal layer 400, third metal layers 407a and 407b formed on the second metal layers 405a and 405b, and organic layers 409a and 409b formed on the third metal layers 407a and 407b. In this case, at least a portion of the third metal layers 407a and 407b may be plated on the second metal layers 405a and 405b by a combination of electroplating and electroless plating.

In FIG 8, when forming the third metal layers 407a and 407b on the metal 125b, a first area Pa of the metal 125b, which corresponds to the inside of the pouch 110, is plated by a combination of electroplating and electroless plating, and a second area Pb of the metal 125b, which corresponds to the outside of the pouch 110, is plated by electroless plating.

That is, based on the border BOR between the inside and the outside of the pouch 110, the third metal layers 407a and 407b are formed in the first area Pa of the metal 125b inside the pouch 110 by a hybrid method using a combination of electroplating and electroless plating, and the third metal layers 407a and 407b are formed in the second area Pb of the metal 125b outside the pouch 110 by electroless plating.

FIGS. 9A to 10C are diagrams referred to in explaining FIG 8.

FIG 9A is a diagram illustrating a grain size of the second metal layers and a grain size of the third metal layers in the case where the third metal layers 407a and 407b in the first area (Pa) of FIG 8 are formed by a combination of chromium (Cr)-based electroplating and electroless plating.

Referring to FIG 9A, the grain size NGr of the second metal layers 405a and 405b is smaller than the grain size CGr of the third metal layers 407a and 407b.

The grains of the third metal layers 407a and 407b, formed by a combination of electroplating and electroless plating, may have both a plate shape and a circular shape.

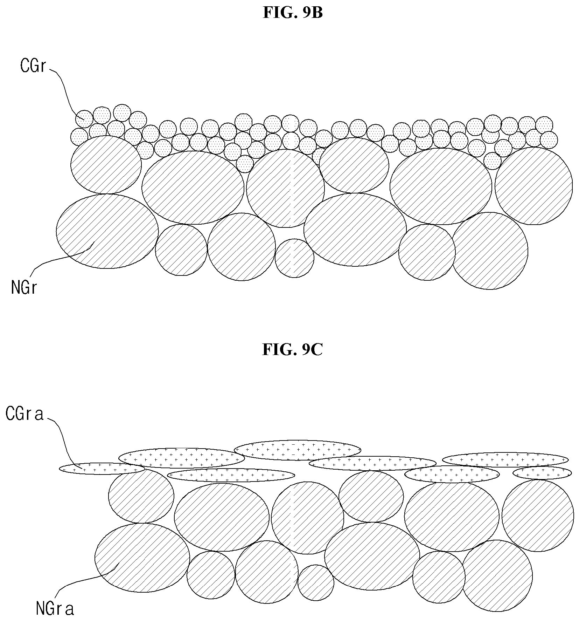

That is, the grain size of the third metal layers 407a and 407b formed in the first area Pa of FIG 9A may be more inhomogeneous than the grain size of the third metal layers 407a and 407b formed in the second area Pb of FIG 9B. Accordingly, density of the third metal layers 407a and 407b in the first area Pa may be higher than density of the third metal layers 407a and 407b in the second area Pb, such that the electrolyte in the first area Pa may not easily penetrate into the second metal layers 405a and 405b.

In this manner, similarly to FIG 6B, the film 127 attached to the metal 125b is not separated from the metal 125b in the area (Ar) near the border (BOR) between the inside and the outside of the pouch 110, thereby preventing electrolyte leakage at the border (BOR) between the inside and the outside of the pouch 110, and preventing corrosion of the metal 125b.

FIG 9B is a diagram illustrating a grain size of the second metal layers and a grain size of the third metal layers when the third metal layers 407a and 407b of FIG 8 are formed by chromium (Cr)-based electroless plating.

Referring to FIG 9B, the grain size NGr of the second metal layers 405a and 405b is smaller than the grain size CGr of the third metal layers 407a and 407b.

The grains of the third metal layers 407a and 407b, formed by electroless plating, may have a circular shape, similarly to the grains of the second metal layers 405a and 405b.

Upon comparison of FIG 9B and FIG 9C, the grains of the third metal layers 407a and 407b of FIG 9C have a plate shape, while the grains of the third metal layers 407a and 407b of FIG 9b have a circular shape.

Accordingly, the grain size CGr of the third metal layers 407a and 407b plated by electroless plating is smaller than the grain size CGra of the third metal layers 407a and 407b plated by electroplating, such that density may be improved.

FIG 9B illustrates a grain size of the second metal layers and a grain size of the third metal layers when the third metal layers 407a and 407b formed in the second area Pb of FIG 8.

FIG 9C illustrates a grain size of the second metal layers and a grain size of the third metal layers when the third metal layers 407a and 407b of FIG 8 are formed by chromium (Cr)-based electroplating.

Referring to FIG 9C, the grain size NGra of the second metal layers 405a and 405b is smaller than the grain size CGra of the third metal layers 407a and 407b.

Unlike the grains of the second metal layers 405a and 405b, the grains of the third metal layers 407a and 407b, formed by electroplating, have a plate shape, such that the electrolyte may easily penetrate into the second metal layers 405a and 405b.

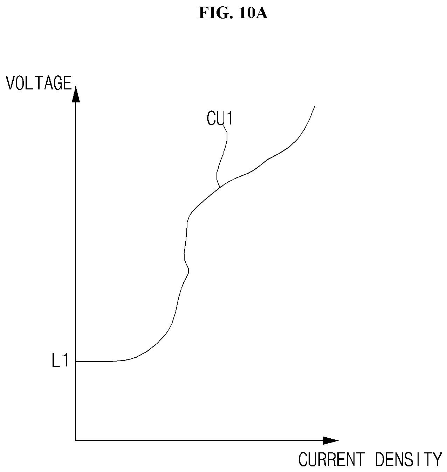

FIGS. 10A to 10C are diagrams illustrating current density versus voltage characteristics of the metal 125b with respect to the grains of the third metal layers 407a and 407b of FIGS. 9A to 9C.

FIGS. 10A to 10C respectively illustrate Cu1, Cu2, and Cu3 which are curves of the current density versus voltage characteristics.

Initial voltage values L1, L2, and L3, illustrated in FIGS. 10A to 10C respectively, are increased in descending order.

That is, stability of potential of the metal 125b is increased in the order of FIGS. 10A to 10C. The potential characteristics are related to separation of the film 127 from the metal 125b, in which as the potential is decreased, the film 127 is less likely to come off.

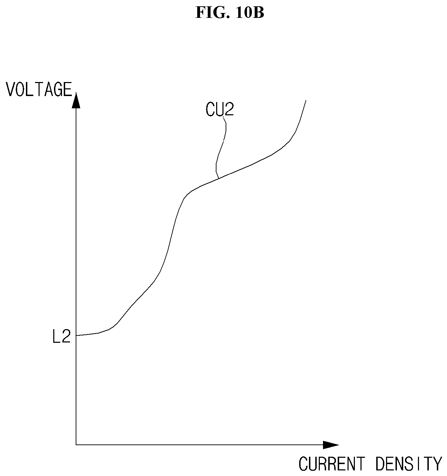

That is, the hybrid method using a combination of electroplating and electroless plating, as illustrated in FIG 9A or 10A, shows the lowest possibility of separation of the film 127 from the metal 125b; and the method of electroless plating illustrated in FIG 9B or 10B shows a low possibility of separation of the film 127 from the metal 125b.

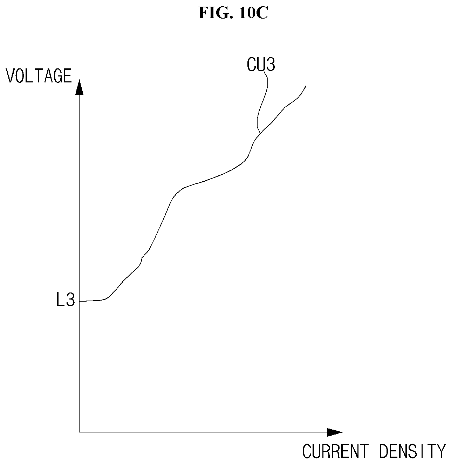

Further, the method of electroplating illustrated in FIG 9C or 10C shows the highest possibility of separation of the film 127 from the metal 125b.

The electrokinetic potential at the surface of the metal 125b may be gradually decreased in the order of FIGS. 10A to 10C.

In the method of electroless plating of FIG 10B or the hybrid method of FIG 10A, it is desired that the electrokinetic potential at the surface of the metal 125b is in a range of -0.1 V to -0.6 V

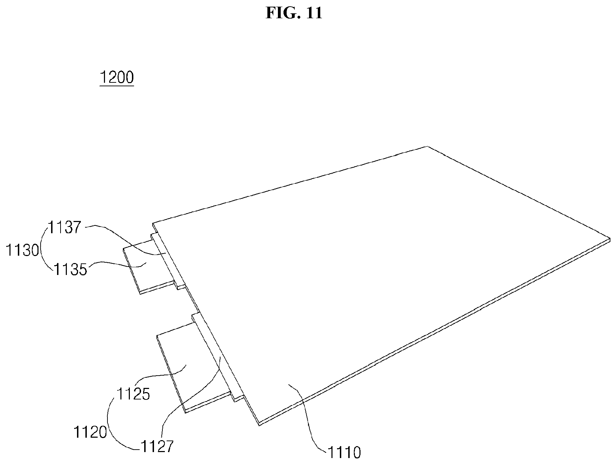

FIG 11 is a diagram illustrating a pouch type battery according to another embodiment of the present disclosure.

Referring to FIG 11, the pouch type battery 1200 is similar to the pouch type battery 100 of FIG 2, but is different therefrom in that a first lead tab 1120, which is electrically connected to a cathode of the pouch 1110 and protrudes outside of the pouch 1110, and a second lead tab 1130, which is electrically connected to an anode of the pouch 1110 and protrudes outside of the pouch 1110, are formed at one of both ends of the pouch 1110.

That is, in the pouch type battery 100 of FIG 2, the first lead tab 120 and the second lead tab 130 are formed respectively at each of both ends of the pouch 1110; but as illustrated in FIG 11, the first lead tab 1120 and the second lead tab 1130 may also be formed on the same end of the pouch 1110.

The first lead tab 1120 and the second lead tab 1130 may include the metals 1125 and 1135 and the films 1127 and 1137, respectively.

The above description of FIGS. 1 to 10C may be applied to the metal 1125 and the film 1127 of the first lead tab 1120 which is electrically connected to the cathode.

As described above, the lead tab and the pouch type battery including the same are not limited to the configuration and method of the aforementioned embodiments, and all or some of the above embodiments may be selectively combined with each other to enable various modifications thereof.

While the present disclosure has been shown and described with reference to the preferred embodiments thereof, it should be understood that the present disclosure is not limited to the specific embodiments, and various modifications and variations may be made by those skilled in the art without departing from the scope of the invention as defined by the appended claims.

## Claims

1. A lead tab (120) attached to an electrode of a pouch type battery (100), the lead tab comprising:
a metal (125); and
a sealing film (127) disposed on at least one surface of the metal,
wherein the metal (125) comprises:
a first metal layer (400),
second metal layers (405a,405b) disposed on both sides based on the first metal layer (400) by performing electroplating
third metal layers (407a,407b) disposed on the second metal layers (405a, 405b), respectively, and
anti-corrosion layers (409a,409b) disposed on the third metal layers (407a,407b), respectively,
wherein at least a portion of the third metal layer is plated on the second metal layer by electroless plating,
wherein grains of the second metal layers (405a,405b) have a circular shape,
wherein grains of the third metal layers (407a,407b) have not a plate shape but the circular shape,
wherein the grain size of the third metal layer plated by electroless plating is smaller than a grain size of the second metal layer.

2. The lead tab of claim 1, wherein the grain size of the third metal layer plated by electroless plating is smaller than a grain size of the third metal layer plated by electroplating.

3. The lead tab of claim 1, wherein a height (h3) of the third metal layer is lower than a height (h2) of the second metal layer, and a height (h4) of the organic layer is lower than the height (h2) of the second metal layer.

4. The lead tab of claim 1, wherein the first metal layer includes copper, the second metal layer includes nickel, and the third metal layer includes chromium.

5. The lead tab of claim 1, wherein:
the metal is connected to the electrode inside the pouch, and protrudes outside of the pouch; and
the film is attached to the metal based on a border between an inside and an outside of the pouch.

6. The lead tab of claim 5, wherein a first area of the film inside the pouch is greater than a second area of the film outside the pouch.

7. The lead tab of claim 1, wherein the entire third metal layer is plated on the second metal layer by electroless plating.

8. The lead tab of claim 1, wherein the film is attached on both sides of the metal.

9. The lead tab of claim 1, wherein the second metal layer, the third metal layer, and the organic layer are plated on both sides based on the first metal layer.

10. The lead tab of claim 1, wherein the electrode inside the pouch is a cathode.

11. The lead tab of claim 1, wherein the height of the third metal layer is in a range of 3 nm to 20 nm.

12. A pouch type battery (100), comprising:
a pouch (110);
an anode (155) and a cathode (157) in the pouch;
a separation film (153) for separating the anode and the cathode;
an electrolyte in the pouch;
a first lead tab (120) electrically connected to the cathode and protrudes outside of the pouch; and
a second lead tab (130) electrically connected to the anode and protrudes outside of the pouch,
wherein the first lead tab (120) comprises the lead tab of any one of claims 1 to 11.

## Patentansprüche

1. Anschlusslasche (120), die an einer Elektrode einer beutelartigen Batterie (100) angebracht ist, die Anschlusslasche umfassend:
ein Metall (125); und
eine Dichtungsfolie (127), die auf mindestens einer Oberfläche des Metalls angeordnet ist,
worin das Metall (125) umfasst:
eine erste Metallschicht (400),
zweite Metallschichten (405a, 405b), die auf beiden Seiten der ersten Metallschicht (400) durch Elektroplattieren angeordnet sind,
dritte Metallschichten (407a, 407b), die jeweils auf den zweiten Metallschichten (405a, 405b) angeordnet sind,
Antikorrisionsschichten (409a, 409b), die jeweils auf den dritten Metallschichten (407a, 407b) angeordnet sind,
worin mindestens ein Teil der dritten Metallschicht auf die zweite Metallschicht durch stromlose Plattierung plattiert ist,
worin Körner der zweiten Metallschichten (405a, 405b) kreisförmig sind,
worin Körner der dritten Metallschichten (407a, 407b) nicht plattenförmig, sondern kreisförmig sind,
worin die Korngröße der dritten Metallschicht, die durch stromlose Plattierung plattiert ist, kleiner ist als eine Korngröße der zweiten Metallschicht.

2. Anschlusslasche gemäß Anspruch 1, worin die Korngröße der dritten Metallschicht, die durch stromlose Plattierung plattiert ist, kleiner ist als eine Korngröße der dritten Metallschicht, die durch Elektroplattierung plattiert ist.

3. Anschlusslasche gemäß Anspruch 1, worin eine Höhe (h3) der dritten Metallschicht, die durch stromlose Plattierung plattiert ist, niedriger ist als eine Höhe (h2) der zweiten Metallschicht, und eine Höhe (h4) der organischen Schicht niedriger ist als eine Höhe (h2) der zweiten Metallschicht.

4. Anschlusslasche gemäß Anspruch 1, worin die erste Metallschicht Kupfer enthält, die zweite Metallschicht Nickel enthält und die dritte Metallschicht Chrom enthält.

5. Anschlusslasche gemäß Anspruch 1, worin:
das Metall mit der Elektrode innerhalb des Beutels verbunden ist und aus dem Beutel herausragt; und
die Folie an der Kante zwischen dem Inneren und dem Äußeren des Beutels angebracht ist.

6. Anschlusslasche gemäß Anspruch 5, worin ein erster Bereich der Folie innerhalb des Beutels größer ist als ein zweiter Bereich der Folie außerhalb des Beutels.

7. Anschlusslasche gemäß Anspruch 1, worin die gesamte dritte Metallschicht auf die zweite Metallschicht durch stromloses Plattieren plattiert ist.

8. Anschlusslasche gemäß Anspruch 1, worin die Folie an beiden Seiten des Metalls angebracht ist.

9. Anschlusslasche gemäß Anspruch 1, worin die zweite Metallschicht, die dritte Metallschicht und die organische Schicht an beiden Seiten der ersten Metallschicht plattiert sind.

10. Anschlusslasche gemäß Anspruch 1, worin die Elektrode innerhalb des Beutels eine Kathode ist.

11. Anschlusslasche gemäß Anspruch 1, worin die Höhe der dritten Metallschicht in einem Bereich von 3 nm bis 20 nm liegt.

12. Beutelartige Batterie (100), umfassend:
einen Beutel (110);
eine Anode (155) und eine Kathode (157) im Beutel;
eine Trennfolie (153) zum Trennen der Anode und der Kathode;
einen Elektrolyten im Beutel;
eine erste Anschlusslasche (120), die mit der Kathode elektrisch verbunden ist und aus dem Beutel herausragt; und
eine zweite Anschlusslasche (130), die mit der Anode elektrisch verbunden ist und aus dem Beutel herausragt,
worin die erste Anschlusslasche (120) die Anschlusslasche gemäß einem der Ansprüche 1 bis 11 umfasst.

## Revendications

1. Languette de connexion (120) attachée à une électrode d'une batterie de type poche (100), la languette de connexion comprenant :
un métal (125) ; et
un film d'étanchéité (127) disposé sur au moins une surface du métal,
dans laquelle le métal (125) comprend :
une première couche métallique (400),
des deuxièmes couches métalliques (405a, 405b) disposées sur les deux côtés sur la base de la première couche métallique (400) en effectuant un électroplacage
des troisièmes couches métalliques (407a, 407b) disposées sur les deuxièmes couches métalliques (405a, 405b), respectivement, et
des couches anticorrosion (409a, 409b) disposées sur les troisièmes couches métalliques (407a, 407b), respectivement,
dans laquelle au moins une portion de la troisième couche métallique est plaquée sur la deuxième couche métallique par placage anélectrolytique,
dans laquelle des grains des deuxièmes couches métalliques (405a, 405b) présentent une forme circulaire,
dans laquelle des grains des troisièmes couches métalliques (407a, 407b) ne présentent pas une forme de plaque mais la forme circulaire,
dans laquelle la taille de grain de la troisième couche métallique plaquée par placage anélectrolytique est plus petite qu'une taille de grain de la deuxième couche métallique.

2. Languette de connexion selon la revendication 1, dans laquelle la taille de grain de la troisième couche métallique plaquée par placage anélectrolytique est plus petite qu'une taille de grain de la troisième couche métallique plaquée par électroplacage.

3. Languette de connexion selon la revendication 1, dans laquelle une hauteur (h3) de la troisième couche métallique est inférieure à une hauteur (h2) de la deuxième couche métallique, et une hauteur (h4) de la couche organique est inférieure à la hauteur (h2) de la deuxième couche métallique.

4. Languette de connexion selon la revendication 1, dans laquelle la première couche métallique inclut du cuivre, la deuxième couche métallique inclut du nickel, et la troisième couche métallique inclut du chrome.

5. Languette de connexion selon la revendication 1, dans laquelle :
le métal est relié à l'électrode à l'intérieur de la poche, et fait saillie à l'extérieur de la poche ; et
le film est attaché au métal sur la base d'une frontière entre un intérieur et un extérieur de la poche.

6. Languette de connexion selon la revendication 5, dans laquelle une première aire du film à l'intérieur de la poche est supérieure à une deuxième aire du film à l'extérieur de la poche.

7. Languette de connexion selon la revendication 1, dans laquelle la totalité de la troisième couche métallique est plaquée sur la deuxième couche métallique par placage anélectrolytique.

8. Languette de connexion selon la revendication 1, dans laquelle le film est attaché sur les deux côtés du métal.

9. Languette de connexion selon la revendication 1, dans laquelle la deuxième couche métallique, la troisième couche métallique, et la couche organique sont plaquées sur les deux côtés sur la base de la première couche métallique.

10. Languette de connexion selon la revendication 1, dans laquelle l'électrode à l'intérieur de la poche est une cathode.

11. Languette de connexion selon la revendication 1, dans laquelle la hauteur de la troisième couche métallique se situe dans une plage de 3 nm à 20 nm.

12. Batterie de type poche (100), comprenant :
une poche (110) ;
une anode (155) et une cathode (157) dans la poche ;
un film séparateur (153) destiné à séparer l'anode et la cathode ;
un électrolyte dans la poche ;
une première languette de connexion (120) reliée électriquement à la cathode et faisant saillie à l'extérieur de la poche ; et
une deuxième languette de connexion (130) reliée électriquement à l'anode et faisant saillie à l'extérieur de la poche,
dans laquelle la première languette de connexion (120) comprend la languette de connexion selon l'une quelconque des revendications 1 à 11.
